# FASCICULE DE BREVET EUROPEEN

(11) **EP 1 215 424 B1**
(45) Date de publication et mention de la délivrance du brevet: **27.09.2006**
(21) Numéro de dépôt: 00204557.3
(22) Date de dépôt: 15.12.2000
(51) Int. Cl.: F16K 1/30, F16K 17/14

(54) **Valve de gaz avec sécurité incorporée**
Sicherheitsgasventil
Safety gas valve

(43) Date de publication de la demande: 19.06.2002
(60) Demande divisionnaire: 06114419.2
(73) Titulaire: LUXEMBOURG PATENT COMPANY S.A., 1720 Luxembourg (LU)
(72) Inventeur: Goffin, Claude, 6761 Chenois (BE); Gallet, Bernard, F-78700 Conflans Sainte Honorine (FR)
(74) Mandataire: Weydert, Robert

(56) Documents cités:
- EP-A- 0 060 789
- EP-A- 0 848 205
- FR-A- 1 567 928
- GB-A- 2 112 124
- JP-A- 59 106 782
- US-A- 5 787 921
- US-A- 5 799 684

## Description

L'invention se rapporte à une valve de gaz pour conduite ou bonbonne de gaz comprimé ou liquéfié, comportant un boîtier ayant un passage traversant dans lequel se trouve un élément de valve mobile entre une position ouverte et une position fermée et portant une bague d'étanchéité, l'élément de valve mobile étant sollicité par un ressort vers sa position fermée dans laquelle la bague d'étanchéité est normalement en contact étanche avec un siège fixe prévu sur une épaule formée dans le passage traversant, dans la position ouverte de l'élément de valve mobile un libre passage d'écoulement étant formé dans le passage traversant autour de l'élément de valve mobile et de sa bague d'étanchéité plaçant une partie du passage traversant sur un côté du siège en communication avec une autre partie de ce passage sur l'autre côté du siège. Une valve à gaz de ce type est divulguée dans EP-A1-0 848 205 et aussi dans UA-A-5,787,921.

Une valve de gaz de ce type fonctionnant en tant que valve d'arrêt est souvent pourvue d'un clapet de sûreté séparé qui ouvre automatiquement si une surpression dangereuse se développe dans le passage traversant du boîtier en vue de laisser s'échapper un faible volume de gaz pour réduire la surpression. Ce clapet de sûreté séparé complique la construction de la valve de gaz.

La présente invention a pour but de fournir une valve de gaz du type précité ayant une construction simplifiée mais capable d'assumer les fonctions de vanne d'arrêt et de clapet de sûreté.

Selon la présente invention, pour atteindre ce but , la valve de gaz du type précité est caractérisée en ce que la bague d'étanchéité est montée sur l'élément de valve mobile de sorte que sous l'influence d'une surpression dépassant une valeur prédéterminée appliquée sur au moins une partie de la périphérie externe de la bague d'étanchéité celle-ci soit délogée de sa position de retenu normale sur l'élément de valve mobile en vue d'empêcher une fermeture étanche de la valve de gaz et de permettre la réduction de la surpression par la valve de gaz autour de l'élément de valve mobile qui, dégarni de sa bague d'étanchéité, ne peut plus engager de façon étanche son siège même sous l'influence de la force du ressort poussant l'élément de valve mobile vers son siège.

Par conséquent, en fonctionnement normal l'élément de valve peut être poussé par l'application d'une force externe en position ouverte contre l'effet du ressort, et le ressort ferme l'élément de valve si la force externe n'est pas présente. En cas de surpression l'élément d'étanchéité est délogé de l'élément de valve est chassé hors de la valve qui dégarni de l'élément d'étanchéité, ne peut plus fermer de façon étanche ce qui permet la réduction de la pression par passage d'une faible quantité de gaz par la valve d'arrêt. Une seule valve sert donc comme valve d'arrêt et clapet de sûreté et le besoin pour le clapet de sûreté séparé est évité.

Dans un mode d'exécution préféré des éléments de guidage sont espacés circonférentiellement autour de l'élément de valve mobile pour centrer l'élément de valve mobile dans le passage traversant. Ces éléments de guidage peuvent être formés par des ergots radiaux solidaires de l'élément de valve mobile et prenant appui sur une surface du passage traversant.

Des écarteurs sont de préférence espacés circonférentiellement autour de l'élément de valve mobile dans le passage traversant pour empêcher un contact le long d'une ligne circonférentielle continue entre l'élément de valve mobile et l'épaule ou le siège fixe lorsque l'élément de valve mobile, dégarni de sa bague d'étanchéité, est poussée par le ressort vers le siège fixe. Ces écarteurs sont de préférence des projections axiales portées par l'élément de valve mobile est s'étendant vers le siège fixe. Les projections axiales peuvent être prévues sur les ergots radiaux guidant l'élément de valve mobile dans le passage traversant.

Un écartement annulaire d'une dimension radiale suffisante pour permettre l'éjection de la bague d'étanchéité délogée est prévue entre une nervure radiale retenant la bague d'étanchéité sur l'élément de valve mobile et une surface interne du passage traversant entourant la nervure si l'élément de valve mobile se trouve dans sa position fermée ou à proximité de celle-ci. De préférence, le diamètre externe de la nervure n'est pas plus grand qu'environ 50% du diamètre de la surface interne du passage traversant. Aussi, le diamètre externe de la nervure n'est pas beaucoup plus grand que le diamètre interne de la bague d'étanchéité. De préférence le diamètre externe de la nervure n'est pas plus grand qu'environ 160% du diamètre interne de la bague d'étanchéité annulaire. En outre, le diamètre de la surface interne citée ci-avant du passage traversant n'est pas beaucoup plus petit que diamètre maximal externe de la bague d'étanchéité et il est relativement proche de ce diamètre maximal de la bague d'étanchéité, de préférence le diamètre de la surface précité interne du passage traversant est au moins égal à environ 75% du diamètre maximal de la bague d'étanchéité.

La valve de la présente invention peut aussi être pourvue d'un limiteur de débit comportant un corps mobile situé dans le passage traversant et pouvant se déplacer entre une position fermée en contact avec un siège fixe et une position normale ouverte dégagée de ce siège fixe par un ressort, le corps mobile ou un élément stationnaire de la valve ayant au moins un orifice d'équilibrage de pression de faible diamètre pour maintenir en position fermée du corps mobile une communication entre les deux côtés du siège fixe en vue de permettre par cet orifice un équilibrage des pressions en amont et en aval du siège fixe si le corps mobile se trouve en position fermée, et le corps mobile ayant un opercule de rupture pouvant être séparé du corps mobile sous l'effet d'une surpression dépassant une valeur prédéterminée appliquée au corps mobile dans le sens de sa fermeture de sorte que le gaz puisse s'échapper par le limiteur de débit dépourvu de l'opercule de rupture même si le corps mobile est poussé vers son siège sous l'effet de ladite surpression.

Ce limiteur de débit est disposé dans le passage traversant du boîtier en série avec l'élément de valve mobile de la valve à gaz formant en même temps valve d'arrêt et clapet de sûreté.

Le limiteur de débit ferme contre l'effort du ressort si la différence de pression sur ses côtés opposés devient trop grande mais il est normalement retenu en position ouverte par le ressort. En cas d'une surpression dangereuse le corps mobile du limiteur de débit est poussé contre l'effort du ressort en position fermée et la surpression cause la rupture de l'opercule de rupture permettant à la surpression de ce propager sensiblement sans restriction à travers le corps mobile du limiteur de débit.

Selon un mode d'exécution préféré le corps mobile du limiteur de débit est pourvu d'une cavité axiale et l'opercule de rupture forme une paroi d'extrémité radiale de cette cavité et un ou plusieurs passages d'écoulement axiaux sont formés autour du corps mobile par lesquels le gaz s'écoule normalement si le corps mobile est en position ouverte. De préférence, l'opercule de rupture se trouve à l'une des extrémités du corps mobile qui est aussi pourvue d'une surface d'étanchéité contactant le siège fixe en position fermée du corps mobile, l'opercule de rupture est relié au corps mobile par une zone d'affaiblissement s'étendant autour de l'opercule et situé près de la surface d'étanchéité et l'opercule de rupture est pourvu de l'orifice de l'équilibrage de pression. De préférence, l'opercule de rupture a un diamètre externe approximativement égal au diamètre de la cavité axiale et le siège fixe est formé sur une épaule d'une partie du passage traversant à diamètre réduit correspondant approximativement au diamètre de la cavité axiale de sorte que le gaz peut passer librement par l'intérieur du corps mobile sans restriction après rupture de l'opercule sous l'effet de la surpression.

Le corps mobile peut être disposé à l'intérieur d'un manchon tubulaire fixe retenu dans le boîtier et portant une bague annulaire pour guider une extrémité de l'élément de valve mobile de la valve de gaz formant valve d'arrêt et clapet de sûreté.

L'invention sera maintenant expliquée en plus grand détail en référence aux dessins annexés sur lesquels :
La figure 1 est une représentation en coupe longitudinale d'un ensemble de valve de gaz dans sa position debout de raccordement a une bonbonne de gaz, avec le limiteur de débit en position ouverte et la valve d'arrêt fonctionnant en tant que clapet de sûreté en position fermée.
La figure 2 est une vue en perspective de l'ensemble de valve avec le limiteur de débit en position ouverte et la bague d'étanchéité du clapet de sûreté dégagée ou délogée de sa position normale.
La figure 3A est une représentation de l'extrémité inférieure de l'ensemble de valve avec le limiteur de débit en position fermée.
La figure 3B est une représentation de l'extrémité inférieure de l'ensemble de valve montrant le corps mobile du limiteur de débit après la rupture de l'opercule sous l'effet d'une surpression de gaz dans la bonbonne de gaz.
La figure 4 est une représentation agrandie de l'extrémité supérieure de l'ensemble de valve avec la bague d'étanchéité de l'élément mobile de la valve d'arrêt dégagée de sa position de retenue sous l'effet de la surpression de gaz dans la bonbonne de gaz.
La figure 5 est une vue en coupe transversale long de la ligne 5-5 de la figure 3A.

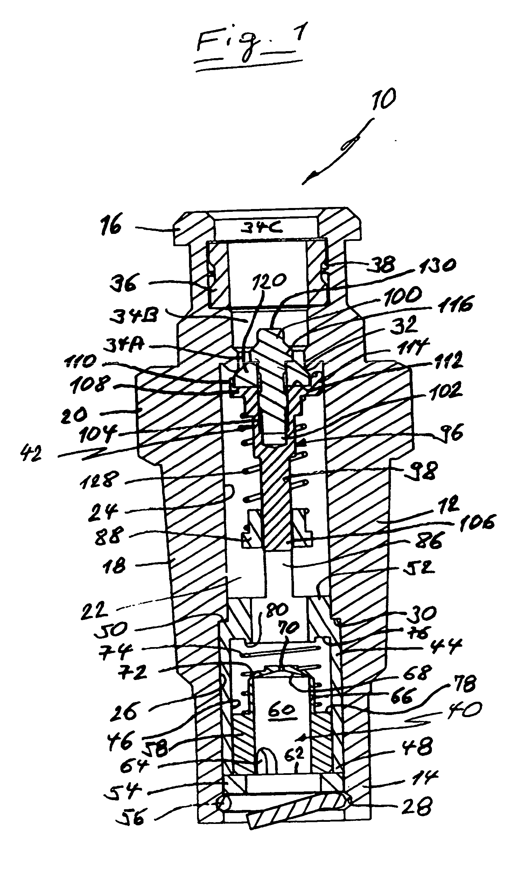

Se référent maintenant aux figures en plus grand détail, la figure 1 montre l'ensemble de valve en position debout pour raccordement à une bonbonne de gaz, non-représentée. L'ensemble de valve 10 a un boîtier 12 ayant une extrémité inférieure 14 pour raccordement à une bonbonne de gaz (non-représentée) et une extrémité supérieure 16 à laquelle un détendeur (non-représenté) peut être fixé. Le boîtier 12 de l'ensemble de valve a une section conique 18 pourvue d'un filetage conique (non-représenté) pour raccorder l'ensemble de valve 10 à la bonbonne de gaz. A l'extrémité supérieure de la section conique 18 se trouve une partie à plus grand diamètre 20 ayant une forme appropriée pour appliquer par une clé de serrage un moment de rotation approprié pour visser de façon étanche le filet conique dans l'ouverture de la bonbonne à gaz.

Le boîtier 12 est pourvu d'un passage traversant 22 débouchant à l'extrémité inférieure 14 et à l'extrémité supérieure 16 du boîtier 12. Le passage traversant 22 a un alésage central 24, un contre-alésage 26 s'étendant de l'alésage central 24 jusqu'à l'extrémité inférieure 14. Une rainure annulaire 28 est prévue à proximité de l'extrémité inférieure 14 et une épaule radiale 30 est formée entre l'alésage central 24 et le contre-alésage 26. A l'extrémité supérieure 16 de l'alésage central 24 se trouve un siège annulaire fixe 32 et le passage traversant 22 est complété par trois alésages 34A, 34B et 34C s'étendant du siège 32 vers l'extrémité supérieure 16 du boîtier 12. Chacun de ces alésages 34A, 34B et 34C a un diamètre différent. L'alésage 34A proche du siège fixe 32 a le plus petit diamètre et l'alésage 34C proche de l'extrémité supérieure 16 du boîtier 12 a le plus grand diamètre. Un anneau d'étanchéité cylindrique 36 est reçu dans une rainure circonférentielle 38 pratiquée dans l'alésage 34C. Cet anneau d'étanchéité cylindrique 36 sert à recevoir le détendeur (non-représenté) de façon étanche.

Dans le passage traversant 22 sont disposés en série un limiteur de débit 40 et une valve d'arrêt servant en tant que clapet de sûreté 42. Le limiteur de débit 40 se trouvant dans la partie inférieure et le clapet de sûreté 42 se trouvant dans la partie supérieure du passage traversant 22 du boîtier 12. Le limiteur de débit 40 est spécialement conçu pour être utilisé ensemble avec la valve d'arrêt ou clapet de sûreté 42, mais peut aussi être utilisé séparément de la valve d'arrêt ou clapet de sûreté.

Un manchon tubulaire 44 ayant un alésage axial 46 est disposé dans le contre-alésage 26 du passage traversant 22. L'alésage 46 débouche à l'extrémité inférieure 48 du manchon tubulaire 44. Le manchon tubulaire 44 a près de son extrémité supérieure une épaule 50 maintenue en contact avec l'épaule 30 prévue entre l'alésage central 24 et le contre-alésage 26. Une partie supérieure 52 du manchon tubulaire 44 est reçue dans l'alésage central 24. Une bague d'arrêt 54 se trouve dans le contre-alésage 26 à l'extrémité inférieure 48 du manchon tubulaire 44 et le manchon tubulaire 44 et la bague d'arrêt 54 sont retenus en position par une bague élastique à détacher 56 placée dans la rainure annulaire 28 du contre-alésage 26. Cette bague élastique 56 maintient les épaules 30 et 50 du boîtier 12 et du manchon tubulaire 44 en contact permanent.

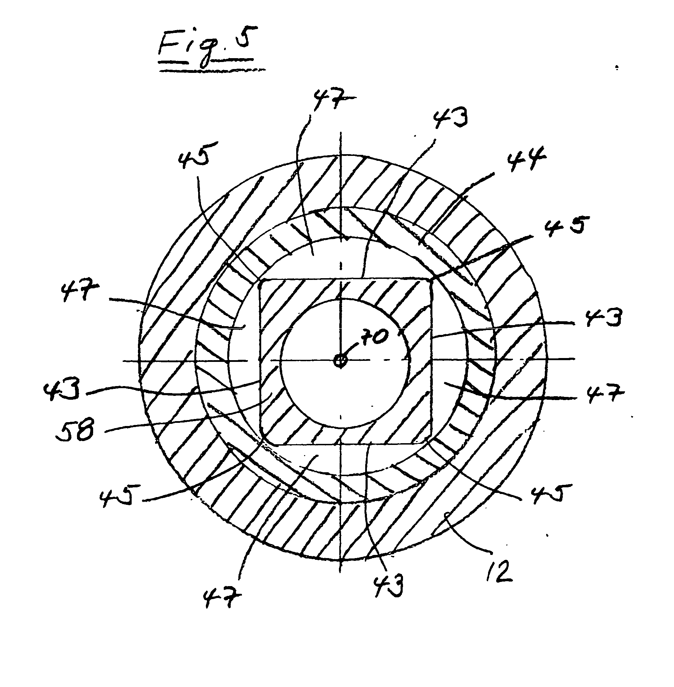

Dans l'alésage axial 46 du manchon tubulaire 44 se trouve le corps mobile 58 du limiteur de débit 40. Ce corps mobile 58 a une cavité ou un alésage axial 60 débouchant à l'extrémité inférieure 62 du corps mobile 58. Comme représenté en figure 5, la partie inférieure du corps mobile 58 a en coupe transversale une forme externe carrée qui est centrée pour mouvement coulissant dans l'alésage axial 46 du manchon tubulaire 44 et forme plusieurs passages d'écoulement 47 pour le courant du gaz. Les coins 45 situés entre les côtés ou surfaces plates 43 de la forme carrée guident le corps mobile 58 dans le manchon tubulaire 44 et les côtés ou surfaces plates 43 disposés entre les coins forment les passages d'écoulement 47 ensemble avec la surface de l'alésage axial 46 du manchon tubulaire 44. Ces passages communiquant par une découpure 64 avec l'alésage axial 60 du corps mobile et donc avec le passage traversant 22. Le corps mobile 58 a une partie supérieure 66 à diamètre réduit portant en haut un opercule de rupture 68. Un petit orifice d'équilibrage de pression 70 est prévu dans l'opercule 68. L'opercule 68 est relié par une section circulaire de rupture affaiblie à épaisseur réduite 72 à la partie supérieure 66 du corps mobile 58. Un ressort de compression hélicoïdal 74 pousse le corps mobile vers sa position ouverte et s'appuie à l'une de ses extrémités sur une épaule interne 76 du manchon tubulaire 44, l'extrémité opposée de ce ressort 74 s'appuyant sur une épaule radiale 78 du corps mobile 56 formée en bas de sa partie supérieure 66 à diamètre réduit.

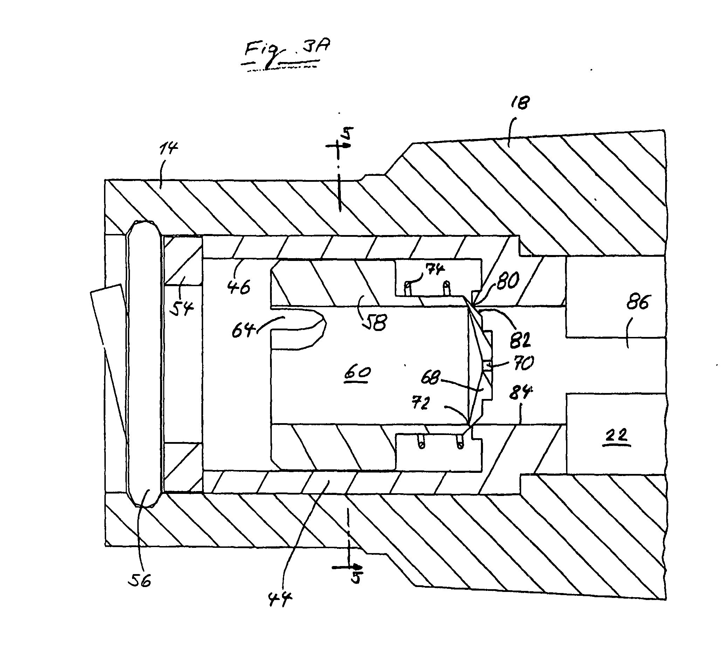

Le manchon tubulaire 44 est pourvu d'un siège fixe 80 qui est engagé par une surface d'étanchéité conique 82, voir figure 3A, du corps mobile 58 en position fermée de celui-ci, représentée sur la figure 3A. La surface d'étanchéité conique 82 est prévue sur la partie supérieure 66 à diamètre réduit du corps mobile 58 et entoure l'opercule de rupture 68. La section de rupture affaiblie 72 se trouvant approximativement au milieu de la surface conique 92. Le siège 80 est situé à l'extrémité inférieure d'un passage circulaire central 84 ayant un plus petit diamètre que l'alésage axial 46 du manchon tubulaire 44 et s'étendant de l'alésage axial 46 vers le haut. Le passage circulaire axial 84 débouche à l'extrémité supérieure du manchon tubulaire 44 dans le passage traversant 22.

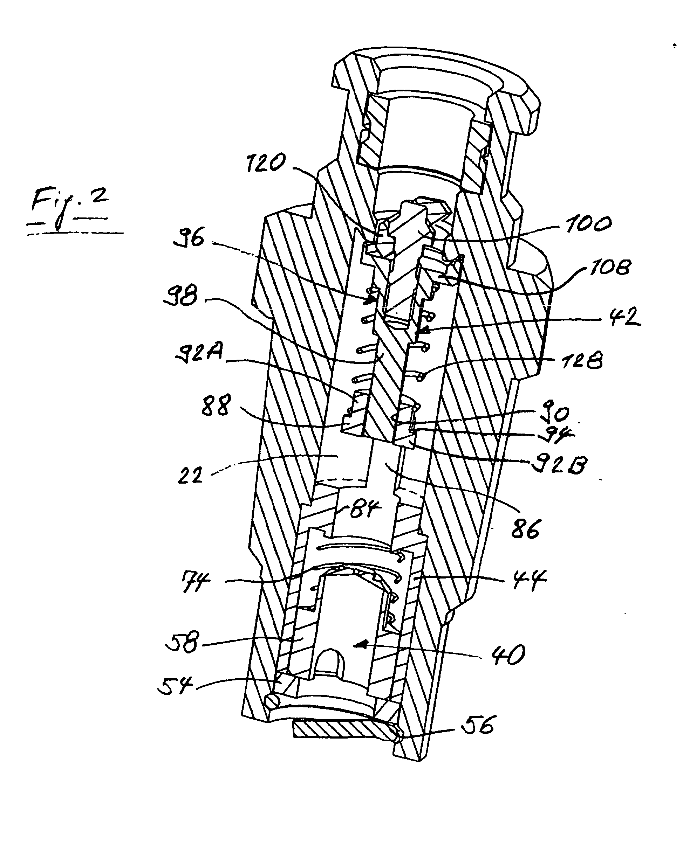

Tel que représenté sur la figure 2, montrant l'ensemble de valve en perspective, une projection axiale 86 s'étend vers le haut du manchon tubulaire 44. En fait, le manchon tubulaire est pourvu de deux projections 86, qui sont diamétralement opposées. Les extrémités supérieures de ces projections 86 portent une bague de guidage 88 ayant un alésage central 90 et deux diamètres externes 92A et 92B. Le grand diamètre 92B se trouvant en bas du petit diamètre 92A et une épaule radiale 94 orientée vers le haut du boîtier 12 est formée entre les deux diamètres. Les deux diamètres 92A et 92B sont plus petits que le diamètre de l'alésage central 24 dans lequel la bague de guidage 88 est disposée pour laisser passer le courant de gaz par l'espace entre la bague de guidage 88 et le boîtier 12.

La valve d'arrêt ou clapet de sûreté 42 est pourvu d'un élément de valve mobile 96 constitué de deux pièces, c'est-à-dire une première pièce externe inférieure 98 et une seconde pièce interne supérieure 100 reçue en partie dans un alésage 102 de la pièce externe 98 par un raccord fileté 104.

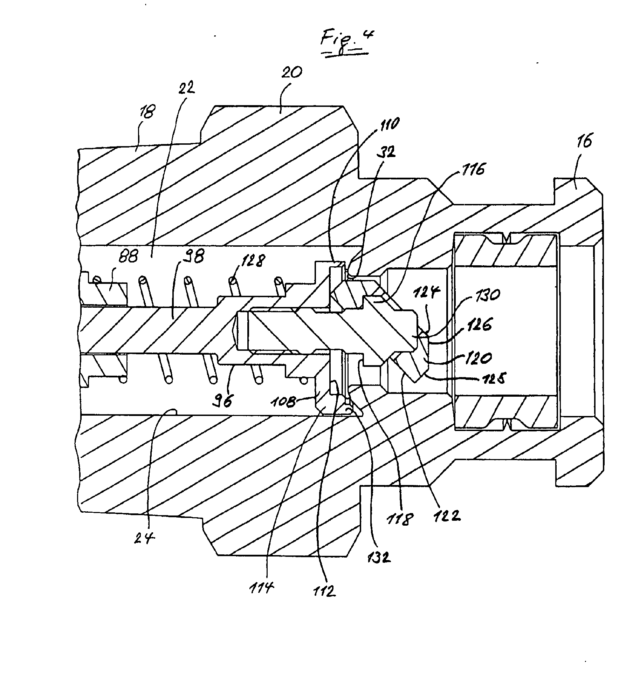

L'extrémité inférieure 106 de la pièce externe 98 a une tige de guidage guidée de façon coulissante dans l'alésage central de la bague de guidage 88. A son extrémité supérieure la pièce externe 98 est pourvue d'un flasque radial 108 pourvu sur sa circonférence externe d'un rebord axial 110 orienté vers le haut et ayant un plus petit diamètre externe que le diamètre interne de l'alésage central 24. Le rebord axial 110 entoure une surface ou épaule radiale 112, figure 4, orientée vers le haut de la pièce externe 98 de l'élément de valve mobile 96. Le rebord axial 110 est pourvu sur sa circonférence externe de plusieurs ergots 114 espacés l'un de l'autre en direction circonférentielle et venant s'engager sur la surface de l'alésage central 24 en vue de guider l'élément de valve mobile 96 pour son mouvement axial à l'intérieur du passage traversant 22.

La pièce interne supérieure 100 de l'élément de valve mobile 96 est pourvue près de son extrémité supérieure d'une collerette 116 formant une nervure circonférentielle pourvue d'une surface ou épaule 118, voir figure 4, orientée vers le bas et écartée axialement de la surface ou épaule radiale 112 du flasque 108 de la pièce inférieure externe 98 de l'élément de valve mobile 96. La surface ou épaule radiale 112 de la pièce inférieure externe 98 de l'élément de valve mobile 96 a un plus grand diamètre externe que la surface ou épaule radiale 118 de la pièce supérieure interne 100 de l'élément de valve mobile 96. Une bague d'étanchéité annulaire 120 en matière élastomère portée par l'élément de valve mobile 96 a une surface inférieure radiale 122 à grand diamètre, une surface supérieure radiale 124 à petit diamètre externe, une surface d'étanchéité conique 126 s'étendant de la surface supérieure radiale 124 et une surface externe cylindrique 125 entre la surface conique 126 et la surface inférieure radiale 122. La bague d'étanchéité 120 est reçue entre les épaules 112 et 118 des pièces externes et internes 98 et 100 de l'élément de valve mobile 96 et en position normale de la bague d'étanchéité 120 les surfaces inférieure et supérieure 122 et 124 de la bague d'étanchéité 120 sont en contact avec les surfaces ou épaules 112 respectivement 118. La surface conique 126 de la bague d'étanchéité 120 en position fermée de la valve d'arrêt ou clapet de sûreté 42, est en engagement étanche avec le siège 32 du passage traversant 22.

Le rebord axial 110 entoure partiellement la surface externe cylindrique 125 de la bague d'étanchéité 120, mais une partie de cette surface externe cylindrique 125 reste exposée à la pression du gaz dans l'alésage central 24. Un ressort de compression hélicoïdal 128 pousse l'élément de valve mobile 96 vers le haut en position fermée et ce ressort 128 s'appuie à son extrémité inférieure sur l'épaule 94 de la bague de guidage 88 et engage à son extrémité supérieure le côté inférieur du flasque 108.

La figure 1 montre l'ensemble de valve 10 avec le limiteur de débit 40 en position totalement ouverte dans laquelle le corps mobile 58 est en contact avec la bague d'arrêt 54, qui est la position normale du limiteur de débit. Le ressort 74 maintient le corps mobile 58 dans cette position. Sur la figure 1 la valve d'arrêt ou clapet de sûreté 42 est en position fermée qui est obtenue par la force du ressort 128 poussant la surface d'étanchéité 126 de la bague d'étanchéité 120 en engagement étanche avec le siège 32 du passage traversant 22. Dans cette position le gaz ne peut pas passer par l'ensemble de valve 10. Pour remplir du gaz dans la bonbonne de gaz, un raccord de remplissage (non-représenté) est raccordé à l'extrémité supérieure 16 du boîtier 12. Le raccord exerce une force axiale à un prolongement 130 à l'extrémité supérieure de la pièce supérieure interne 100 de l'élément de valve mobile 96 en vue de le déplacer vers le bas et de dégager l'élément d'étanchéité 120 du siège 32 pour permettre le passage du courant de gaz de l'extrémité supérieure 16 vers l'extrémité inférieure 14 du boîtier 12 en vue de s'écouler dans la bonbonne de gaz. Pour la distribution du gaz de la bonbonne de gaz l'élément de valve mobile 96 est aussi maintenu par un détendeur (non-représenté) en position ouverte dégagée du siège 32. Dans cet état le ressort 128 est comprimé.

Lorsque la différence de pression aux extrémités opposées 14 et 16 de l'ensemble de valve 10 devient trop grande, par exemple de l'ordre de ± 1 BAR, le limiteur de débit 40 entre en action et se déplace sous l'effet de la pression à l'intérieur de la bonbonne de gaz vers le siège 80 de l'élément tubulaire 44 en vue de limiter le débit du gaz. Si la surface d'étanchéité conique 82 représentée en figure 3A est en contact avec le siège 80 l'orifice 70 à faible diamètre permet l'équilibrage des pressions et la réouverture du limiteur de débit 40 par son ressort 74, c'est-à-dire le dégagement du corps mobile 58 du siège 80, après l'équilibrage des pressions. Sans cet équilibrage des pressions en amont et en aval du corps mobile 58 par l'orifice 70 le ressort 74 ne serait plus capable de rouvrir le limiteur de débit.

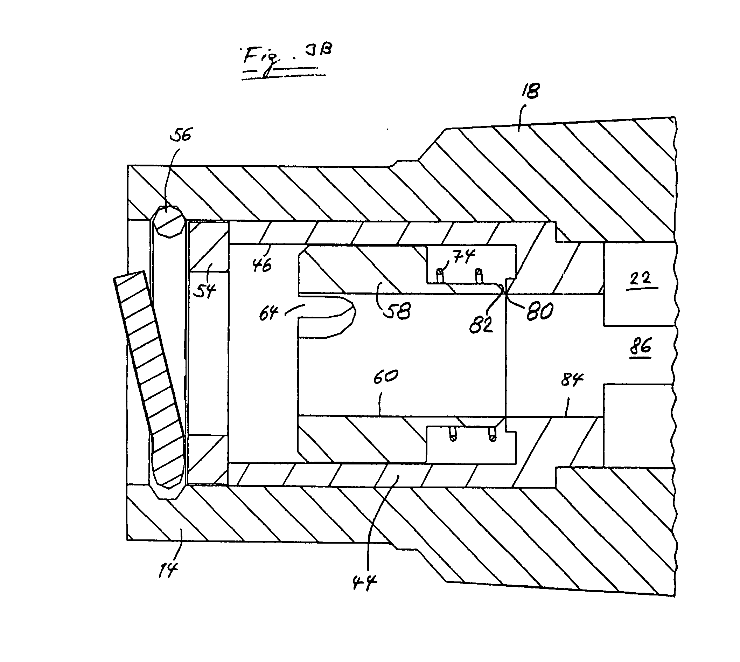

Dans le cas d'une surpression dépassant une valeur prédéterminée, par exemple de l'ordre de ± 30 BAR, à l'intérieur de la bonbonne de gaz, le corps mobile 58 du limiteur de débit 40 est aussi poussé vers le haut sous l'influence de la surpression en position fermée et la surpression cause la rupture de l'opercule 68 le long de sa section de rupture réduite 72. La figure 3B représentant la position et l'état du corps mobile 58 après la rupture de l'opercule 68. Le gaz peut maintenant passer directement sans restriction de l'alésage axial 60 dans le corps mobile 58 par le passage 84 dans l'alésage central 24 du boîtier 12 sans passer par les passages externes 47 du corps mobile.

L'on peut constater que la surpression élevée de la bonbonne de gaz peut entrer dans l'alésage central 24 où elle est appliquée sur la périphérie externe de la bague d'étanchéité 120 comprimant cette bague d'étanchéité 120 radialement et causant le dégagement ou délogement de la bague d'étanchéité 120 de sa position normale entre les épaules 112 et 118. Alors que sur les figures 2 et 4 la bague d'étanchéité 120 est représentée partiellement délogée de sa position normale sur l'élément de valve mobile 96 et située sur la nervure annulaire 116 de la pièce interne supérieure 100 de l'élément de valve mobile 96, il est noté que la bague d'étanchéité 120 est en effet totalement éjectée de la valve d'arrêt ou clapet de sûreté 42 par un écartement annulaire formé dans la position fermée de l'élément de valve mobile 96 entre la nervure annulaire 116 et l'alésage 34A dans lequel cette nervure annulaire 116 se trouve en position fermée de l'élément de valve mobile 96. Cet écartement annulaire a une dimension radiale suffisante pour permettre l'éjection de la bague d'étanchéité 120. Le diamètre extérieur de l'épaule à petit diamètre 118 ou le diamètre extérieur de la nervure annulaire 116 n'est pas plus grand qu'environ 50% du diamètre de l'alésage 34A du passage traversant 24 qui entoure la nervure annulaire 116 dans la position fermée ou supérieure de l'élément de valve mobile 96. Aussi, le diamètre extérieur de la nervure 116 n'est pas plus grand qu'environ 160% du diamètre interne de la bague d'étanchéité. De l'autre côté, le diamètre de l'alésage 34B du passage traversant 24 est au moins environ 75% du diamètre extérieur maximal de la bague d'étanchéité. Cela assure un écartement annulaire de dimension radiale suffisante pour l'éjection de la bague d'étanchéité 120. Si l'élément de valve mobile 96 est dégarnie de la bague d'étanchéité 120 celle-ci ne peut plus venir en contact avec le siège 32 du boîtier 12 et le gaz peut s'échapper de la bonbonne de gaz, à raison d'environ 1 litre par minute, par libre passage axial à travers la valve d'arrêt ou clapet de sûreté 42 qui ne peut plus être fermé de façon étanche. Il reste à mentionner que les ergots de guidage 114 de la pièce externe inférieure 98 de l'élément de valve mobile 96 sont munis de petites projections axiales 132, voir figure 4, s'étendant vers le haut en direction du siège 32 et empêchant que le rebord 110 puisse venir en contact étanche avec le siège 32 en vue de refermer le clapet de sûreté. De cette manière la surpression dangereuse dans la bonbonne de gaz peut être réduite. Bien étendu, l'ensemble de valve 10 est inutilisable après la rupture de l'opercule 68 et le dégagement de la bague d'étanchéité 120 de sa position normale sous l'effet de la surpression du gaz, et il doit être remplacée.

Des modifications peuvent être apportées au mode d'exécution décrit ci-avant. Par exemple, le manchon tubulaire 44 peut être éliminé et la tige inférieure de l'élément de valve mobile 96 peut être guidée dans une bague solidaire du boîtier 12 ou attachée à celui-ci. Le boîtier 12 peut être fabriqué en plusieurs pièces. Le manchon tubulaire 44 peut avoir plus que deux projections 86 portant la bague de guidage 88. Les projections axiales 132 empêchant la fermeture étanche du clapet de sûreté après le délogement de la bague d'étanchéité 120 peuvent être solidaires du boîtier 12 et disposées autour du siège 32 et les ergots de guidage peuvent être remplacés par des nervures axiales formées sur la surface de l'alésage central 24. En outre, les passages d'écoulement 47 peuvent être formés dans le manchon tubulaire 44 ou directement dans le boîtier 12 si le manchon tubulaire n'est pas prévu. L'orifice d'équilibrage 70 des pressions formé dans l'opercule de rupture 68 peut être remplacé par un ou plusieurs orifices formés dans le manchon tubulaire 44, ou dans le boîtier 12 si le manchon tubulaire n'est pas prévu, par exemple dans le siège 80, pour placer le côté amont du siège en communication avec le côté aval du siège si le corps mobile 58 est en contact avec le siège 80 pour permettre l'équilibrage des pressions et la réouverture du limiteur de débit 40. D'autres modifications peuvent être prévues par l'homme de l'art sans sortir du cadre de l'invention, tel que défini par les revendications annexées.

## Revendications

1. valve de gaz pour conduite ou bonbonne de gaz comprimé ou liquéfié, comportant un boîtier (12) ayant un passage traversant (22) dans lequel se trouve un élément de valve (96) mobile entre une position ouverte et une position fermée et portant une bague d'étanchéité (120), l'élément de valve mobile (96) étant sollicité par un ressort (128) vers sa position fermée dans laquelle la bague d'étanchéité (120) est normalement en contact étanche avec un siège fixe (32) prévu sur une épaule formée dans le passage traversant (22), dans la position ouverte de l'élément de valve mobile (96) un libre passage d'écoulement étant formé dans le passage traversant (22) autour de l'élément de valve mobile (96) et de sa bague d'étanchéité (120) plaçant une partie du passage traversant (22) sur un côté du siège (32) en communication avec une autre partie de ce passage (22) sur l'autre côté du siège (32), **caractérisé en ce que** la bague d'étanchéité (120) est montée sur l'élément de valve mobile (96) de sorte que sous l'influence d'une surpression dépassant une valeur prédéterminée appliquée sur au moins une partie de la périphérie externe de la bague d'étanchéité (120) celle-ci soit délogée de sa position de retenue normale sur l'élément de valve mobile (96) en vue d'empêcher une fermeture étanche de la valve à gaz (10) et de permettre la réduction de la surpression par la valve à gaz autour de l'élément de valve mobile (96) qui, dégarni de sa bague d'étanchéité (120), ne peut plus engager de façon étanche son siège (32) même sous l'influence de la force du ressort (128) poussant l'élément de valve mobile (96) vers son siège (32).

2. Valve selon la revendication 1, **caractérisée par** des éléments de guidage (114) espacés circonférentiellement autour de l'élément de valve mobile (96) pour centrer l'élément de valve mobile (96) dans le passage traversant (22).

3. Valve selon la revendication 2, **caractérisée en ce que** les éléments de guidage (114) sont des ergots radiaux solidaires de l'élément de valve mobile (96) et prenant appui sur une surface du passage traversant (22).

4. Valve selon l'une quelconque des revendications 1 à 3, **caractérisée par** des écarteurs (132) espacés circonférentiellement autour de l'élément de valve mobile (96) dans le passage traversant (22) pour empêcher un contact le long d'une ligne circonférentielle continue entre l'élément de valve mobile (96) et l'épaule ou le siège fixe (32) lorsque l'élément de valve mobile (96), dégarni de sa bague d'étanchéité (120), est poussé par le ressort vers le siège fixe (32).

5. Valve selon la revendication 4, **caractérisée en ce que** les écarteurs (132) sont des projections axiales portées par l'élément de valve mobile (96) et s'étendant vers le siège fixe (32).

6. Valve selon la revendication 3, **caractérisée en ce que** les ergots radiaux (114) portent des projections axiales (132) s'étendant vers le siège fixe (32) pour empêcher un contact le long d'une ligne circonférentielle continue entre l'élément de valve mobile (96) et l'épaule ou le siège fixe (32) lorsque l'élément de valve mobile (96), dégarni de sa bague d'étanchéité (120), est poussé par le ressort (128) vers le siège fixe (32).

7. Valve selon la revendication 3 ou 6, **caractérisée en ce que** la bague d'étanchéité (120) est normalement retenue entre une nervure (116) à petit diamètre externe et un flasque (108) à grand diamètre externe de l'élément de valve mobile (96), le flasque (108) à grand diamètre externe portant les ergots radiaux (114).

8. Valve selon la revendication 7, **caractérisée en ce que** l'élément de valve mobile (96) est formé de deux pièces raccordées ensemble et portant respectivement la nervure (116) et le flasque (108).

9. Valve selon l'une quelconque des revendications 1 à 8, **caractérisée en ce que** la bague d'étanchéité (120) est en matière élastomère.

10. Valve selon l'une quelconque des revendications 1 à 9, **caractérisée en ce que** la bague d'étanchéité (120) est normalement retenue sur un côté faisant face vers une extrémité libre de l'élément de valve mobile (96) par une surface radiale d'une nervure (116) de l'élément de valve mobile (96) et un écartement annulaire d'une dimension radiale suffisante est prévue entre le diamètre externe de cette nervure (116) et une surface interne du passage traversant (22) entourant la nervure (116) si l'élément de valve mobile (96) se trouve dans sa position fermée ou à proximité de celle-ci pour permettre l'éjection de la bague d'étanchéité (120).

11. Valve selon la revendication 10, **caractérisée en ce que** le diamètre externe de la nervure (116) n'est pas plus grand qu'environ 50% du diamètre de ladite surface interne du passage traversant (22).

12. Valve selon la revendication 10 ou 11, **caractérisée en ce que** le diamètre externe de la nervure (116) n'est pas supérieur à environ 160% du diamètre interne de la bague d'étanchéité (120)

13. Valve selon la revendication 10, 11 ou 12,
**caractérisée en ce que** le diamètre de ladite surface interne du passage traversant (22) est au moins égal à environ 75% du diamètre maximal de la bague d'étanchéité (120).

14. Valve selon l'une quelconque des revendications précédantes, **caractérisée en ce qu'**un limiteur de débit (40) est placé dans le passage traversant (22) du boîtier (12) en série avec l'élément de valve mobile (96), ce limiteur de débit (40) ayant un corps (58) mobile entre une position fermée dans laquelle il est en engagement avec un second siège fixe (80) prévu dans le boîtier (12) et une position normale ouverte dégagée du second siège fixe (80) par un ressort (74), le corps mobile (58) ou un élément stationnaire de la valve (10) ayant au moins un orifice d'équilibrage de pression (70) à faible diamètre pour maintenir en position fermée du corps mobile (58) une communication entre les deux côtés du second siège fixe (80) en vue de permettre par cet orifice (70) un équilibrage des pressions en amont et en aval du second siège fixe (80) si le corps mobile (58) se trouve en position fermée, et le corps mobile (58) ayant un opercule de rupture (68) pouvant être séparé du corps mobile (58) par ladite surpression appliquée au corps mobile (58) dans le sens de sa fermeture de sorte que le gaz puisse s'échapper librement par le limiteur de débit (40) dépourvu de l'opercule de rupture (68) même si le corps mobile (58) est en engagement avec son siège (80) sous l'effet de ladite surpression.

15. Valve selon la revendication 14, **caractérisée en ce que** le corps mobile (58) est pourvu d'une cavité axiale (60), l'opercule de rupture (68) formant une paroi d'extrémité radiale de cette cavité axiale (60), et **en ce qu'**au moins un ou plusieurs passages d'écoulement axiaux (47) sont formés autour du corps mobile (58) et par lequel le gaz s'écoule normalement en position ouverte du corps mobile (58).

16. Valve selon la revendication 14, **caractérisée en ce que** l'opercule de rupture (68) se trouve à l'une des extrémités du corps mobile (58) qui est aussi pourvue d'une surface d'étanchéité (82) contactant le second siège fixe (80) en position fermée du corps mobile (58).

17. Valve selon la revendication 16, **caractérisée en ce que** l'opercule de rupture (68) est relié au corps mobile (58) par une zone d'affaiblissement (72) s'étendant autour de l'opercule (68) et située près de la surface d'étanchéité (82).

18. Valve selon l'une quelconque des revendications 14 à 17, **caractérisée en ce que** l'opercule de rupture (68) est pourvu de l'orifice d'équilibrage de pression (70).

19. Valve selon la revendication 15, **caractérisée en ce que** le passage d'écoulement axial (47) est formé sur la circonférence du corps mobile (58).

20. Valve selon l'une quelconque des revendications 14 à 19, **caractérisée en ce que** le ressort (74) est situé entre une épaule externe (78) du corps mobile (58) et une épaule interne (76) du passage traversant (22).

21. Valve selon la revendication 15, **caractérisée en ce que** l'opercule de rupture (68) a un diamètre externe approximativement égal au diamètre de la cavité axiale (60) et le second siège fixe (80) est formé sur une épaule (76) d'une partie du passage traversant (22) à diamètre réduit correspondant approximativement au diamètre de la cavité axiale (60).

22. Valve selon l'une quelconque des revendications 14 à 21, **caractérisée en ce qu'**une bague d'arrêt (54) limite le mouvement du corps mobile (58) dans la direction de son ouverture.

23. Valve selon l'une quelconque des revendications 14 à 22, **caractérisée en ce que** le corps mobile (58) est disposé dans un manchon tubulaire (44) retenu en position fixe dans le boîtier (12) et ayant deux alésages communiquants internes (46, 84) à diamètres différents, le second siège fixe (80) se trouvant sur une épaule radiale (76) entre ces alésages (46, 84) et le corps mobile (58) étant coulissable dans l'alésage (46) à grand diamètre.

24. Valve selon la revendication 23, **caractérisé en ce que** le manchon tubulaire (44) est solidaire d'une bague de guidage (88) pour guider et centrer l'élément de valve mobile (96) dans le passage traversant (22).

## Claims

1. Gas valve for compressed or liquefied gas conduit or cylinder, comprising a housing (12) having a through passage (22) wherein there is provided a valve element (96) movable between an open position and a closed position and carrying a sealing ring (120), the movable valve element (96) being biased by a spring (128) towards its closed position wherein the sealing ring (120) is normally in tight engagement with a fixed seat (32) provided on a shoulder formed in the through passage (22), in the open position of the movable valve element (96) a free flow passage being formed in the flow passage (22) about the movable valve element (96) and its sealing ring (120) placing a portion of the through passage (22) on one side of the seat (32) in communication with another portion of said passage (22) on the other side of the seat (32), **characterized in that** the sealing ring (120) is mounted on the movable valve element (96) so that under the effect of an overpressure exceeding a predetermined value applied to at least a portion of the external circumference of the sealing ring (120) said sealing ring is unseated from its normal rest position on the movable valve element (96) to prevent tight closure of the gas valve (10) and permit reduction of the overpressure through the gas valve about the movable valve element (96) which, devoid of its sealing ring (120), is no longer capable to tightly engage its seat (32) even under the effect of the force of the spring (128) urging the movable valve element (96) towards its seat (32).

2. Valve according to claim 1, **characterized by** guide elements (114) circumferentially spaced about the movable valve element (96) for centering the movable valve element (96) in the through passage (22).

3. Valve according to claim 2, **characterized in that** the guide elements (114) are radial projections provided on the movable valve element (96) and being in supporting engagement with a surface of the through passage (22).

4. Valve according to any one of claims 1 to 3, **characterized by** spacers (132) circumferentially spaced about the movable valve element (96) in the through passage (22) to avoid engagement along a continuous circumferential line between the movable valve element (96) and the shoulder or the fixed seat (32) when the movable valve element (96), devoid of its sealing ring (120), it biased by the spring towards the fixed seat (32).

5. Valve according to claim 4, **characterized in that** the spacers (132) are radial projections carried by the movable valve element (96) and extending towards the fixed seat (32).

6. Valve according to claim 3, **characterized in that** the radial projections (114) are provided with axial protuberances (132) extending towards the fixed seat (32) to avoid engagement along a continuous circumferential line between the movable valve element (96) and the shoulder or the fixed seat (32) when the movable valve element (96), devoid of its sealing ring (120), is biased by the spring (128) towards the fixed seat (32).

7. Valve according to claim 3 or 6, **characterized in that** the sealing ring (120) is normally retained between a rib (116) of small external diameter and a flange (108) of large external diameter of the movable valve element (96), the flange (108) of large external diameter being provided with the radial projections (114).

8. Valve according to claim 7, **characterized in that** the movable valve element (96) consists of two interconnected members, one of them being provided with the rib (116) and the other with the flange (108).

9. Valve according to any one of claims 1 to 8, **characterized in that** the sealing ring (120) consists of elastomeric material.

10. Valve according to any one of claims 1 to 9, **characterized in that** the sealing ring (120) is normally retained on a side oriented towards a free end of the movable valve element (96) by a radial surface of a rib (116) of the movable valve element (96) and an annular spacing of a sufficient radial dimension is provided between the external diameter of said rib (116) and an internal surface of the through passage (22) surrounding the rib (116) when the movable valve element (96) is in its closed position or proximate thereto to permit dislodgement of the sealing ring (120) .

11. Valve according to claim 10, **characterized in that** the external diameter of the rib (116) is no greater than about 50% of the diameter of said internal surface of said through passage (22).

12. Valve according to claim 10 or 11, **characterized in that** the external diameter of the rib (116) is no greater than about 160% of the internal diameter of the sealing ring (120).

13. Valve according to claim 10, 11 or 12, **characterized in that** the diameter of the internal surface of the through passage (22) is at least equal to about 75% of the maximum diameter of the sealing ring (120).

14. Valve according to any one of the preceding claims, **characterized in that** a flow limiter (40) is located in the through passage (22) of the housing (12) in series with the movable valve element (96), said flow limiter (40) having a body (58) movable between a closed position wherein it is in engagement with a second fixed seat (80) provided in the housing (12) and a normal open position spaced from the second fixed seat (80) by a spring (74), the movable body (58) or a stationary element of the valve (10) having at least one pressure balancing orifice (70) of small diameter to maintain in closed position of the movable body (58) a communication between the two sides of the second fixed seat (80) in order to permit by said orifice (70) an equalization of the pressures upstream and downstream of the second fixed seat (80) when the movable body (58) is in closed position, and the movable body (58) having a burst closure (68) adapted to be separated from the movable body (58) by said overpressure applied to the movable body (58) in its closing direction so that the gas may freely escape through the flow limiter (40) devoid of its burst closure (68) even if the movable body (58) is in engagement with its seat (80) under the effect of said overpressure.

15. Valve according to claim 14, **characterized in that** the movable body (58) is provided with an axial cavity (60), the burst closure (68) forming a radial end wall of said axial cavity (60), and **in that** at least one or a plurality of axial flow passages (47) are formed about the movable body (58) and through which the gas normally flows in the open position of the movable body (58).

16. Valve according to claim 14, **characterized in that** the burst closure (68) is provided at one of the ends of the movable body (58) which is also provided with a sealing surface (82) engaging the second fixed seat (80) in closed position of the movable body (58).

17. Valve according to claim 16, **characterized in that** the burst closure (68) is connected to the movable body (58) by a weakening zone (72) extending about the burst closure (68) and located adjacent the sealing surface (82).

18. Valve according to any one of claims 14 to 17, **characterized in that** the burst closure (68) is provided with the pressure balancing opening (70).

19. Valve according to claim 15, **characterized in that** the axial flow passage (47) is formed on the circumference of the movable body (58).

20. Valve according to any one of claims 14 to 19, **characterized in that** the spring (74) is located between an external shoulder (78) of the movable body (58) and an internal shoulder (76) of the through passage (22).

21. Valve according to claim 15, **characterized in that** the burst closure (68) has an external diameter approximately equal to the diameter of the axial cavity (60) and the second fixed seat (80) is formed on a shoulder (76) of a portion of the through passage (22) having a reduced diameter corresponding approximately to the diameter of the axial cavity (60).

22. Valve according to any one of claims 14 to 21, **characterized in that** a retaining ring (54) limits the movement of the movable body (58) in its opening direction.

23. Valve according to any one of claims 14 to 22, **characterized in that** the movable body (58) is located in a tubular sleeve (44) fixedly retained in the housing (12) and having two communicating internal bores (46, 84) of different diameters, the second fixed seat (80) being provided on a radial shoulder (76) between said bores (46, 84) and the movable body (58) being slidable in the large diameter bore (46).

24. Valve according to claim 23, **characterized in that** the tubular sleeve (44) is provided with a guide ring (88) for guiding and centering the movable valve element (96) in the through passage (22).

## Patentansprüche

1. Gasventil für Druck- oder Flüssiggasleitung oder - flasche, mit einem Gehäuse (12), das einen Durchgangskanal (22) aufweist, in welchem ein Ventilelement (96) angeordnet ist, das zwischen einer Offenstellung und einer Schliessstellung beweglich ist und einen Dichtring (120) trägt, wobei das bewegliche Ventilelement (96) durch eine Feder (128) in die Schliessstellung vorgespannt ist, in welcher der Dichtring (120) normalerweise in dichter Anlage mit einem festen Sitz (32) ist, der auf einer in dem Durchgangskanal (22) geformten Schulter vorgesehen ist, wobei in der Offenstellung des beweglichen Ventilelementes (96) in dem Durchgangskanal (22) ein freier Strömungsdurchlass um das bewegliche Ventilelement (96) und seinen Dichtring (120) geformt ist, der einen Teil des Durchgangskanals (22) auf einer Seite des Sitzes (32) mit einem anderen Teil dieses Kanals (22) auf der anderen Seite des Sitzes (32) in Verbindung setzt, **dadurch gekennzeichnet, dass** der Dichtring (120) auf dem beweglichen Ventilelement (96) so montiert ist damit unter dem Einfluss eines einen vorbestimmten Wert übersteigenden Überdruckes, der mindestens einen Teil des äusseren Umfanges des Dichtringes (120) beaufschlagt, dieser aus seiner normalen Sitzlage auf dem beweglichen Ventilelement (96) verdrängt wird, um ein dichtes Schliessen des Gasventils (10) zu verhindern und das Abbauen des Überdruckes durch das Gasventil um das bewegliche Ventilelement (96) zu erlauben, das, ohne seinen Dichtring (120), sich nicht mehr dicht am Sitz (32) anlegen kann selbst unter der Wirkung der Kraft der Feder (128), welche das bewegliche Ventilelement (96) gegen seinen Sitz (32) drückt.

2. Ventil nach Anspruch 1, **dadurch gekennzeichnet, dass** in Umfangsrichtung voneinander beabstandete Führungselemente (114) um das bewegliche Ventilelement (96) angeordnet sind zum Zentrieren des beweglichen Ventilelementes (96) in dem Durchgangskanal (22).

3. Ventil nach Anspruch 2, **dadurch gekennzeichnet, dass** die Führungselemente am beweglichen Ventilelement (96) vorgesehene radiale Ansätze sind, die sich auf einer Fläche des Durchgangskanals (22) abstützen.

4. Ventil nach einem der Ansprüche 1 bis 3, **gekennzeichnet durch** Abstandshalter (132), welche in dem Durchgangskanal (22) in Abstand voneinander in Umfangsrichtung um das bewegliche Ventilelement (96) angeordnet sind, um eine Berührung entlang einer in Umfangsrichtung durchgehenden Linie zwischen dem beweglichen Ventilelement (96) und der Schulter oder dem festen Sitz (32) verhindern wenn das bewegliche Ventilelement (96), ohne seinen Dichtring (120), **durch** die Feder gegen den festen Sitz (32) gedrückt wird.

5. Ventil nach Anspruch 4, **dadurch gekennzeichnet, dass** die Abstandshalter (132) axiale Vorsprünge sind, die am beweglichen Ventilelement (96) vorgesehen sind und sich in Richtung zum festen Sitz (32) erstrecken.

6. Ventil nach Anspruch 3, **dadurch gekennzeichnet, dass** die radialen Vorsprünge (114) axiale Ansätze (132) aufweisen, die sich in Richtung zu dem festen Sitz (32) erstrecken, um eine Berührung entlang einer in Umfangsrichtung durchgehenden Linie zwischen dem beweglichen Ventilelement (96) und der Schulter oder dem festen Sitz (32) verhindern wenn das bewegliche Ventilelement (96), ohne seinen Dichtring (120), durch die Feder (128) gegen den festen Sitz (32) gedrückt wird.

7. Ventil nach Anspruch 3 oder 6, **dadurch gekennzeichnet, dass** der Dichtring (120) normalerweise zurückgehalten ist zwischen einer Rippe (116) mit kleinem Aussendurchmesser und einem Flansch (108) mit grossem Aussendurchmesser des beweglichen Ventilelementes (96), wobei der Flansch (108) mit grossem Aussendurchmesser die radialen Vorsprünge (114) trägt.

8. Ventil nach Anspruch 7, **dadurch gekennzeichnet, dass** das bewegliche Ventilelement (96) aus zwei miteinander verbundenen Teilen besteht, wobei der eine Teil mit der Rippe (116) und der andere mit dem Flansch (118) versehen ist.

9. Ventil nach einem der Ansprüche 1 bis 8, **dadurch gekennzeichnet, dass** der Dichtring (120) aus Elastomerwerkstoff besteht.

10. Ventil nach einem der Ansprüche 1 bis 9, **dadurch gekennzeichnet, dass** der Dichtring (120) normalerweise auf einer Seite zurückgehalten ist, die zu einem freien Ende des beweglichen Ventilelementes (96) weist durch eine Radialfläche einer Rippe (116) des beweglichen Ventilelementes (96) und ein Ringspalt mit ausreichender radialer Abmessung vorgesehen ist zwischen dem Innendurchmesser dieser Rippe (116) und einer Innenfläche des Durchgangskanals (22), die die Rippe (116) umgibt wenn das bewegliche Ventilelement (96) sich in seiner Schliessstellung oder nahe an der Schliessstellung befindet, um das Verdrängen des Dichtringes (120) zu erlauben.

11. Ventil nach Anspruch 10, **dadurch gekennzeichnet, dass** der Aussendurchmesser der Rippe (116) nicht grösser ist als etwa 50% des Durchmessers der Aussenfläche des Durchgangskanals (22).

12. Ventil nach Anspruch 10 oder 11, **dadurch gekennzeichnet, dass** der Aussendurchmesser der Rippe (116) nicht grösser ist als etwa 160% des Innendurchmessers des Dichtringes (120).

13. Ventil nach Anspruch 10, 11 oder 12, **dadurch gekennzeichnet, dass** der Durchmesser der Innenfläche des Durchgangskanals (22) mindestens etwa 75% des Maximaldurchmessers des Dichtringes (120) entspricht.

14. Ventil nach einem der vorstehenden Ansprüche, **dadurch gekennzeichnet, dass** ein Durchflussbegrenzer (40) in dem Durchgangskanal (22) des Gehäuses (12) in Serie mit dem beweglichen Ventilelement (96) angeordnet ist, wobei der Durchflussbegrenzer (40) einen Körper (48) aufweist, der beweglich ist zwischen einer Schliessstellung in welcher er in Anlage ist mit einem in dem Gehäuse (12) vorgesehenen zweiten, festen Sitz (80), und einer normalen Offenstellung, in welcher er durch eine Feder (74) von dem zweiten festen Sitz (80) abgehoben ist, und wobei der bewegliche Körper (58) oder ein stationäres Element des Ventils (10) mindestens eine Druckausgleichsöffnung (70) mit kleinem Durchmesser aufweist, um in Schliessstellung des beweglichen Körpers (58) eine Verbindung aufrecht zu halten zwischen beiden Seiten des zweiten, festen Sitzes (80), um durch diese Öffnung (70) einen Ausgleich der Drücke aufwärts und abwärts des zweiten festen Sitzes (80) zu erlauben wenn der bewegliche Körper (58) sich in Schliessstellung befindet, und wobei der bewegliche Körper einen Berstverschluss (68) aufweist, der von dem beweglichen Körper (58) zu trennen ist durch die Überdruckbeaufschlagung des beweglichen Körpers (58) im Sinne seines Schliessens, damit das Gas durch den von dem Berstverschluss (68) befreiten Durchflussbegrenzer (40) ausströmen kann selbst wenn der bewegliche Körper (58) unter dem Einfluss des Überdruckes in Anlage mit seinem Sitz (80) ist.

15. Ventil nach Anspruch 14, **dadurch gekennzeichnet, dass** der bewegliche Körper (58) mit einem axialen Hohlraum (60) versehen ist und der Berstverschluss (68) eine radiale Endwand dieses axialen Hohlraumes (60) bildet, und dass mindestens ein Strömungskanal oder mehrere axiale Strömungskanäle (47) um den beweglichen Körper (58) gebildet sind, durch welche in der Offenstellung des beweglichen Körpers (58) das Gas normalerweise strömt.

16. Ventil nach Anspruch 14, **dadurch gekennzeichnet, dass** der Berstverschluss (68) sich an einem der Enden des beweglichen Körpers (58) befindet, das auch mit einer Dichtfläche (82) versehen ist, die in der Schliessstellung des beweglichen Körpers (58) an dem zweiten, festen Sitz (80) anliegt.

17. Ventil nach Anspruch 16, **dadurch gekennzeichnet, dass** der Berstverschluss (68) mit dem beweglichen Körper (58) über einen Schwächungsbereich (72) verbunden ist, der sich um der Berstverschluss (68) erstreckt und angrenzend an die Dichtfläche (82) vorgesehen ist.

18. Ventil nach einem der Ansprüche 14 bis 17, **dadurch gekennzeichnet**, der Berstverschluss (68) mit der Druckausgleichöffnung (70) versehen ist.

19. Ventil nach Anspruch 15, **dadurch gekennzeichnet, dass** der axiale Strömungskanal (47) auf dem Umfang des beweglichen Körpers (58) geformt ist.

20. Ventil nach einem der Ansprüche 14 bis 19, **dadurch gekennzeichnet, dass** die Feder (74) sich zwischen einer Aussenschulter (78) des beweglichen Körpers (58) und einer Innenschulter (76) des Durchgangskanals (22) befindet.

21. Ventil nach Anspruch 15, **dadurch gekennzeichnet, dass** der Berstverschluss (68) einen Aussendurchmesser aufweist, der etwa dem Durchmesser des axialen Hohlraumes (60) entspricht und der zweite feste Sitz (80) auf einer Schulter (76) eines Teiles des Durchgangskanals (22) geformt ist, der einen verringerten Durchmesser aufweist, welcher etwa dem Durchmesser des axialen Hohlraumes (60) entspricht.

22. Ventil nach einem der Ansprüche 14 bis 21, **dadurch gekennzeichnet, dass** ein Anschlagring (54) die Öffnungsbewegung des beweglichen Körpers (58) begrenzt.

23. Ventil nach einem der Ansprüche 14 bis 22, **dadurch gekennzeichnet, dass** der bewegliche Körper (58) in einer Ringhülse (44) sitzt, die in dem Gehäuse festgehalten ist und zwei miteinander kommunizierende, innere Bohrungen (46, 84) unterschiedlichen Durchmessers aufweist, wobei der zweite, feste Sitz (80) auf einer Radialschulter (76) zwischen diesen Bohrungen (46, 84) vorgesehen ist und der bewegliche Körper (58) in der Bohrung (46) mit grossem Durchmesser verschiebbar ist.

24. Ventil nach Anspruch 23, **dadurch gekennzeichnet, dass** die Ringhülse (44) mit einem Führungsring (88) versehen ist zum Führung und Zentrieren des beweglichen Ventilelementes (96) in dem Durchgangskanal (22).
